# EUROPEAN PATENT SPECIFICATION

(11) **EP 2 757 898 B1**
(45) Date of publication and mention of the grant of the patent: **21.10.2015**
(21) Application number: 12769275.4
(22) Date of filing: 20.09.2012
(51) Int. Cl.: A23J 3/14, A23J 3/16, A23L 1/305, A23L 1/00

(54) **POWDERED NUTRITIONAL FORMULATIONS INCLUDING SPRAY-DRIED PLANT PROTEIN**
PULVERFÖRMIGE NÄHRSTOFFFORMULIERUNGEN MIT EINEM SPRÜHGETROCKNETEN PFLANZENPROTEIN
FORMULATIONS NUTRITIONNELLES EN POUDRE COMPRENANT UNE PROTÉINE VÉGÉTALE SÉCHÉE PAR PULVÉRISATION

(30) Priority: 20.09.2011 US 201161537048 P
(43) Date of publication of application: 30.07.2014
(73) Proprietor: ABBOTT LABORATORIES, Abbott Park, IL 60064-3500 (US)
(72) Inventor: NEAL, Cynthia, S., Pickerington, OH 43147 (US); SEEDS, Jeffrey, K., Pickerington, OH 43147 (US)
(74) Representative: Boult Wade Tennant
(86) International application number: PCT/US2012/056337
(87) International publication number: WO 2013/043873

(56) References cited:
- WO-A1-94/08468
- FR-A1- 2 942 586
- US-A1- 2006 159 826
- US-A1- 2009 162 521
- US-A1- 2011 129 573

## Description

### TECHNICAL FIELD OF THE DISCLOSURE

The present disclosure relates to powdered nutritional formulations including a dryblended plant protein. At least a portion of the dryblended plant protein has been spray dried prior to being dryblended into the powdered nutritional formulation.

### BACKGROUND OF THE DISCLOSURE

Adult, pediatric, and infant manufactured nutritional liquids and powders comprising a targeted selection of nutritional ingredients are well known and widely available, some of which may provide a sole source of nutrition, while others may provide a supplemental source. These nutritionals include powders that can be reconstituted with water or other aqueous liquid, as well as concentrated and ready-to-drink nutritional liquids. These powdered nutritional formulations and liquids are especially useful when formulated with selected nutritional ingredients, such as protein.

Powdered nutritional formulations are especially popular for providing nutrition and their use continues to increase around the world. These powdered nutritional formulations are typically prepared by making at least two separate slurries that are first blended together. One slurry may be an aqueous-based slurry and one may be an oil-based slurry. After blending, the resulting mixture is generally heat-treated, standardized, heat-treated a second time, spray-dried, agglomerated and packaged. With this manufacturing process, a substantial amount of energy is required to spray-dry the product and the drying process significantly increases manufacturing time. Additionally, the spray driers may require frequent cleaning to reduce build up of powder in the dryers.

In order to increase throughput and decrease costs, attempts have been made to dryblend certain components into conventionally prepared base powders such that a reduced amount of spray-drying is required during manufacturing. Individual components such as vitamins, minerals, carbohydrates, polyunsaturated fatty acids and proteins have been dryblended into base powders with mixed results. In many cases, reconstitution has been an issue such that preparing a commercially satisfactory beverage is not possible.

FR 2 942 586 A1 and US 2011/129573 A1 relate respectively to a granulated powder and a powdered nutritional formula comprising both plant protein wherein spray-drying occurs only at the final stage of the powder formulation where no dry-blending of various ingredients is involved.

There is therefore a need for dryblended powdered nutritional formulations comprising proteins, including plant proteins, that have improved reconstitution characteristics including improved mouthfeel and improved viscosity.

### SUMMARY OF THE DISCLOSURE

One embodiment of the present disclosure is directed to a powdered nutritional formulation comprising a dryblended plant protein. At least a portion of the dryblended plant protein is spray-dried plant protein.

Another embodiment of the present disclosure is directed to a powdered nutritional formulation comprising at least one milk protein and at least one spray-dried plant protein. The spray-dried plant protein comprises up to about 50 wt.% of the total protein in the powdered nutritional formulation.

Another embodiment of present disclosure is directed to a method of preparing a dryblended powdered nutritional formulation including a spray-dried plant protein. The method comprises preparing a base powder including at least one of a fat, carbohydrate, and protein, and dryblending into the base powder a spray-dried plant protein.

It has been found that when plant proteins, such as pea proteins, are dryblended into nutritional bases powders, even at very low concentrations, when the dryblended nutritional powder is reconstituted, it has an undesirable, gritty mouthfeel that may feel slimy. Also, it has been found that over a short period of time, the reconstituted liquid may develop an undesirably high viscosity that is not commercially acceptable.

It has now been discovered that the undesirable, gritty mouthfeel of the reconstituted powder resulting from the dryblending of a plant protein into a powdered nutritional formulation can be minimized or eliminated by first spray-drying the plant protein prior to dryblending into the powdered nutritional formulation. It has also been found that spray-drying at least a portion of the plant protein prior to dryblending into the powdered nutritional formulation significantly reduces or eliminates the issue of an increasing viscosity over a short period of time upon the powdered nutritional formulation being reconstituted with water.

### DETAILED DESCRIPTION OF THE DISCLOSURE

The methods of manufacturing dryblended nutritional powders of the present disclosure include preparing a base nutritional powder, which may be a dryblended base nutritional powder or a nutritional powder prepared from one or more slurries that are subsequently dried, and further dryblending therein a plant protein that has been spray-dried. The powdered nutritional formulations of the present disclosure comprise spray-dried plant proteins and at least one of fat and carbohydrate. These and other essential or optional elements or limitations of the powdered nutritional formulations and methods of manufacturing powdered nutritional formulations of the present disclosure are described in detail hereafter.

The term "powdered nutritional formulation" as used herein, unless otherwise specified, refers to dryblended powdered nutritional formulations comprising protein, and specifically plant protein, and at least one of fat and carbohydrate, which are reconstitutable with an aqueous liquid, and which are suitable for oral administration to a human.

The term "spray-dried plant protein" as used herein, unless otherwise specified, refers to a plant protein, such as pea protein, that has been subjected to a spray-drying process.

The term "dry-blended" as used herein, unless otherwise specified, refers to the mixing of components or ingredients to form a base nutritional powder or, to the addition of a dry, powdered or granulated component or ingredient to a base powder to form a powdered nutritional formulation.

The terms "fat" and "oil" as used herein, unless otherwise specified, are used interchangeably to refer to lipid materials derived or processed from plants or animals.

All percentages, parts and ratios as used herein, are by weight of the total formulation, unless otherwise specified. All such weights as they pertain to listed ingredients are based on the active level and, therefore, do not include solvents or by-products that may be included in commercially available materials, unless otherwise specified.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The various embodiments of the powdered nutritional formulations of the present disclosure may also be substantially free of any optional or selected essential ingredient or feature described herein, provided that the remaining powdered nutritional formulation still contains all of the required ingredients or features as described herein. In this context, and unless otherwise specified, the term "substantially free" means that the selected powdered nutritional formulations contains less than a functional amount of the optional ingredient, typically less than 0.1% by weight, and also including zero percent by weight of such optional or selected essential ingredient.

The powdered nutritional formulations and corresponding manufacturing methods of the present disclosure can comprise, consist of, or consist essentially of the essential elements of the disclosure as described herein, as well as any additional or optional element described herein or otherwise useful in powdered nutritional formulation applications.

### Product Form

The powdered nutritional formulations of the present disclosure are dryblended nutritional powders comprising spray-dried plant proteins and at least one of fat and carbohydrate; that is, the powdered nutritional formulations include a spray-dried plant protein that has been dryblended into a base nutritional powder. The base nutritional powder may be a 100% dryblended base nutritional powder, or may be a powder that has been prepared from one or more slurries that have been subjected to a drying process. These powders are typically in the form of flowable or substantially flowable particulate compositions, or at least particulate compositions that can be easily scooped and measured with a spoon or similar other device, wherein the compositions can easily be reconstituted by the intended user with a suitable aqueous liquid, typically water, to form a liquid nutritional formulation for immediate oral or enteral use. In this context, "immediate" use generally means within about 48 hours, most typically within about 24 hours, preferably right after reconstitution.

The powdered nutritional formulations include dryblended plant proteins, at least a portion of which is a plant protein that has been spray-dried. In some embodiments, 100% of the plant protein present in the powdered nutritional formulations is a plant protein that has been spray-dried. In some embodiments, 100% of the plant protein is dry-blended into the powdered nutritional formulation.

The powdered nutritional formulations may be formulated with sufficient kinds and amounts of nutrients so as to provide a sole, primary, or supplemental source of nutrition, or to provide a specialized powdered nutritional formulation for use in individuals afflicted with specific diseases or conditions. In one exemplary embodiment, the powdered nutritional formulation may be formulated for use with individuals for repairing muscles and maintaining or building muscle mass.

The powdered nutritional formulations may have a caloric density tailored to the nutritional needs of the ultimate user, although in most instances the reconstituted powders comprise from about 100 to about 700 kcal/240 ml, including from about 150 to about 350 kcal/240 ml, and also including from about 200 to about 320 kcal/240 ml.

The powdered nutritional formulations of the present disclosure may be packaged and sealed in single or multi-use containers, and then stored under ambient conditions for up to about 36 months or longer, more typically from about 12 to about 24 months. For multi-use containers, these packages can be opened and then covered for repeated use by the ultimate user, provided that the covered package is then stored under ambient conditions (e.g., avoid extreme temperatures) and the contents used within about one month or so.

### Plant Protein

The powdered nutritional formulations comprise dryblended spray-dried plant proteins, which mean that the powdered nutritional formulations are formulated with the addition of plant proteins that have been spray-dried prior to being dryblended into the powdered nutritional formulations. Suitable plant proteins for use in the powdered nutritional formulations include pea protein, soy protein, combinations thereof, and the like. Preferred plant proteins are pea proteins, including pea protein isolate, pea protein concentrate, and sources thereof.

The plant protein is present in the powdered nutritional formulation in an amount of up to 100 wt.%, including from about 5 wt.% to 90 wt.%, including from about 20 wt.% to about 65 wt.%, including from about 30 wt.% to about 50 wt.%, and including from about 40 wt.% to about 45 wt.%. At least a portion of the plant protein is dryblended into the powdered nutritional formulation; that is, at least a portion of the plant protein is dryblended into a powdered base nutritional as opposed to being introduced into one or more slurries that are subjected to a drying process to produce a powdered nutritional including the plant protein. The amount of plant protein dryblended into the powdered nutritional formulation may be at least 10 wt.%, including at least 25 wt.%, including at least 50 wt.%, including at least 75 wt.%, including at least 90 wt.%, and including 100 wt.% of the total amount of plant protein.

At least a portion of the plant protein present in the powdered nutritional formulations is spray-dried prior to being introduced (via dryblending or other) into the powdered nutritional formulation. Specifically, at least 50 wt.%, including at least 60 wt.%, including at least 70 wt.%, including at least 75 wt.%, including at least 80 wt.%, including at least 90 wt.%, including at least 95 wt.%, and including 100 wt.% of the plant protein present in the powdered nutritional formulations is a plant protein that has been spray-dried prior to being introduced (via dryblending or other) into the powdered nutritional formulation.

### Macronutrients

The powdered nutritional formulations comprise at least one of fat, protein, and carbohydrate, wherein at least a portion of the protein is a spray-dried plant protein. Generally, any source of fat, carbohydrate, and protein, in addition to the plant protein, that is known or otherwise suitable for use in nutritional products may also be suitable for use herein, provided that such macronutrients are also compatible with the essential elements of the powdered nutritional formulations as defined herein.

Although total concentrations or amounts of the fat, protein, and carbohydrates may vary depending upon the nutritional needs of the intended user, such concentrations or amounts most typically fall within one of the following embodied ranges, inclusive of any other essential fat, protein, and or carbohydrate ingredients as described herein.

Carbohydrate concentrations most typically range from about 5% to about 40%, including from about 7% to about 30%, including from about 10% to about 25%, by weight of the powdered nutritional formulation; fat concentrations most typically range from about 0.5% to about 20%, including from about 1% to about 10%, and also including from about 2% to about 5%, by weight of the powdered nutritional formulation; and protein concentrations most typically range from about 10% to about 90%, including from about 30% to about 85%, and also including from about 40% to about 85%, by weight of the powdered nutritional formulation. Additional ranges for carbohydrates, fats, and proteins, based on % calories of the powdered nutritional formulation, are set forth in the following table.

| Nutrient (% Calories) | Embodiment A | Embodiment B | Embodiment C |
|---|---|---|---|
| Carbohydrate | 1-98 | 10-75 | 30-50 |
| Fat | 1-98 | 20-70 | 35-40 |
| Protein | 1-98 | 5-85 | 15-85 |

Non-limiting examples of suitable fats or sources thereof for use in the powdered nutritional formulations described herein include coconut oil, fractionated coconut oil, soy oil, corn oil, olive oil, safflower oil, high oleic safflower oil, MCT oil (medium chain triglycerides), sunflower oil, high oleic sunflower oil, palm and palm kernel oils, palm olein, canola oil, marine oils, cottonseed oils, and combinations thereof.

Non-limiting examples of suitable carbohydrates or sources thereof for use in the powdered nutritional formulations described herein may include maltodextrin, hydrolyzed or modified starch or cornstarch, glucose polymers, corn syrup, corn syrup solids, rice-derived carbohydrates, glucose, fructose, lactose, high fructose corn syrup, honey, sugar alcohols (e.g., maltitol, erythritol, sorbitol), and combinations thereof.

Non-limiting examples of suitable protein or sources thereof, in addition to the plant proteins discussed above, for use in the powdered nutritional formulations include hydrolyzed, partially hydrolyzed or non-hydrolyzed proteins or protein sources, which may be derived from any known or otherwise suitable source such as milk (*e.g.,* casein, whey), animal (*e.g*., meat, fish), cereal (*e.g*., rice, corn) or combinations thereof. Non-limiting examples of such proteins include milk protein isolates, milk protein concentrates as described herein, such as whey protein concentrates, casein protein isolates, whey protein, caseinates, whole cow's milk, partially or completely defatted milk, soy protein isolates, soy protein concentrates, and so forth.

In one particular embodiment, the powdered nutritional formulation comprises a combination of a plant protein and a milk-based protein. In one exemplary embodiment, the milk-based protein is present in the powdered nutritional formulation in an amount of from about 10 wt.% to about 90 wt.%, including from about 20 wt.% to about 65 wt.%, including from about 30 wt.% to about 50 wt.%, and including from about 40 wt.% to about 45 wt.%.

### Optional Ingredients

The powdered nutritional formulations described herein may further comprise other optional ingredients that may modify the physical, chemical, hedonic or processing characteristics of the products or serve as pharmaceutical or additional nutritional components when used in the targeted population. Many such optional ingredients are known or otherwise suitable for use in other nutritional products and may also be used in the powdered nutritional formulations described herein, provided that such optional ingredients are safe and effective for oral administration and are compatible with the essential and other ingredients in the selected product form.

Non-limiting examples of such optional ingredients include preservatives, antioxidants, emulsifying agents, buffers, pharmaceutical actives, additional nutrients as described herein, colorants, flavors, thickening agents and stabilizers, and so forth.

The powdered nutritional formulations may further comprise vitamins or related nutrients, non-limiting examples of which include vitamin A, vitamin E, vitamin K, thiamine, riboflavin, pyridoxine, vitamin B12, carotenoids, niacin, folic acid, pantothenic acid, biotin, vitamin C, choline, inositol, salts, and derivatives thereof, and combinations thereof.

The powdered nutritional formulations may further comprise minerals, non-limiting examples of which include phosphorus, magnesium, iron, zinc, manganese, copper, sodium, potassium, molybdenum, chromium, selenium, chloride, and combinations thereof.

The powdered nutritional formulations may also include one or more masking agents to reduce or otherwise obscure bitter flavors and after taste in the reconstituted powders. Suitable masking agents include natural and artificial sweeteners, sodium sources such as sodium chloride, and hydrocolloids, such as guar gum, xanthan gum, carrageenan, gellan gum, and combinations thereof. The amount of masking agent in the powdered nutritional formulation may vary depending upon the particular masking agent selected, other ingredients in the formulation, and other formulation or product target variables. Such amounts, however, most typically range from at least about 0.1%, including form about 0.15% to about 3.0%, and also including from about 0.18% to about 2.5%, by weight of the powdered nutritional formulation.

### Methods of Manufacture

Nutritional base powders (into which at least a portion of the spray-dried plant protein is dryblended) may be prepared by dryblending all of the ingredients together to form a dryblended base powder into which at least a portion of the spray-dried plant protein is dryblended. Alternatively, the nutritional base powder (into which at least a portion of the spray-dried plant protein is dry-blended) may be prepared using conventional wet processes which generally include utilizing two or more slurries that are ultimately mixed together, treated, and dried.

At least a portion of the plant protein present in the dry-blended powdered nutritional formulation is plant protein that has been spray-dried prior to being dry-blended with the nutritional base powder. The remainder of the plant protein, if any, that is not spray-dried may be included in the nutritional base powder described above. In a preferred embodiment, 100% of the plant protein present in the powdered nutritional formulation is spray-dried by conventional methods prior to being dryblended or otherwise introduced into the nutritional base powder described above to form the dryblended powdered nutritional formulation.

In some embodiments, the plant protein may be high temperature short time (HTST) pasteurized prior to being spray-dried. Specifically, the plant protein may be added to water and allowed to hydrate until suspended; the water may or may not be heated. This protein-in-water slurry is then HTST processed prior to being spray-dried. Optionally, the plant protein may be conventionally homogenized after the HTST treatment and prior to the spray-drying. The spray-drying step is a conventional spray-drying step that is conducted at conventional well known temperatures and times to produce a spray-dried plant protein.

The manufacturing processes for the dryblended powdered nutritional formulations including spray-dried plant proteins may be carried out in ways other than those set forth herein without departing from the spirit and scope of the present disclosure. The present embodiments are, therefore, to be considered in all respects illustrative and not restrictive and that all changes and equivalents also come within the description of the present disclosure.

### Methods of Use

The dry-blended powdered nutritional formulations described herein and including spray-dried plant protein, when reconstituted, provide an improved mouthfeel over a reconstituted liquid formed from a powder comprising a plant protein that has not been spray-dried. In addition, the dryblended powdered nutritional formulations as described herein provide a means for producing a reconstituted liquid including a plant protein that does not have a viscosity that increases over a short period of time to form a gel-like product.

An individual desirably consumes at least one serving of the reconstituted powdered nutritional formulation daily, and in some embodiments, may consume two, three, or even more servings per day. Each serving is desirably administered as a single undivided dose, although the serving may also be divided into two or more partial or divided servings to be taken at two or more times during the day. The methods of the present disclosure include continuous day after day administration, as well as periodic or limited administration, although continuous day after day administration is generally desirable. The dryblended powdered nutritional formulations may be reconstituted for use in infants, children, and adults.

### EXAMPLES

The following examples illustrate specific embodiments and/or features of the dryblended powdered nutritional formulations including spray-dried plant proteins. The examples are given solely for the purpose of illustration and are not to be construed as limitations of the present disclosure, as many variations thereof are possible without departing from the spirit and scope of the disclosure. All exemplified amounts are weight percentages based upon the total weight of the composition, unless otherwise specified.

The exemplified compositions are dryblended powdered nutritional formulations prepared in accordance with the manufacturing methods described herein, such that each exemplified powdered nutritional formulation has improved mouthfeel and improved viscosity characteristics upon being reconstituted with water due to the inclusion of a plant protein that has been subjected to a spray-drying process during manufacturing.

### Examples 1-5

Examples 1-5 illustrate dry-blended powdered nutritional formulations of the present disclosure, the ingredients of which are listed in the table below. All ingredient amounts are listed as the weight percent of the total powdered nutritional formulation, unless otherwise specified. For each Example, at least a portion of the spray-dried pea protein isolate has been dryblended into the nutritional base powder.

| Ingredient | Example 1 | Example 2 | Example 3 | Example 4 | Example 5 |
|---|---|---|---|---|---|
| Whey Protein Concentrate | 42.5% | 42.5% | 42.5% | 42.5% | 63.68% |
| Pea Protein Isolate (spray-dried) | 42.00% | 42.00% | 42.00% | 42.00% | 21.13% |
| Maltodextrin | 12.72% | 12.40% | 13.11% | 12.52% | 12.42% |
| Flavor | 3.36% | 1.50% | 1.20% | 1.68% | 1.68% |
| Evaporated Milk | 0.00% | 0.50% | 0.00% | 0.00% | 0.00% |
| Carrageenan | 0.20% | 0.20% | 0.20% | 0.30% | 0.20% |
| Xanthan Gum | 0.20% | 0.20% | 0.20% | 0.30% | 0.20% |
| Acesulfame K | 0.13% | 0.13% | 0.13% | 0.13% | 0.13% |
| Sucralose | 0.07% | 0.07% | 0.07% | 0.07% | 0.07% |
| Flour Salt | 0.50% | 0.50% | 0.50% | 0.50% | 0.50% |

### Examples 6-10

Examples 6-10 illustrate dry-blended powdered nutritional formulations of the present disclosure, the ingredients of which are listed in the table below. All ingredient amounts are listed as the weight percent of the total powdered nutritional formulation, unless otherwise specified. For each Example, at least a portion of the spray-dried pea protein isolate has been dryblended into the nutritional base powder.

| Ingredient | Example 6 | Example 7 | Example 8 | Example 9 | Example 10 |
|---|---|---|---|---|---|
| Whey Protein Concentrate | 41.500% | 41.500% | 41.500% | 41.500% | 63.68% |
| Pea Protein Isolate (spray-dried) | 41.00% | 41.00% | 41.00% | 41.00% | 21.13% |
| Maltodextrin | 7.568% | 8.418% | 7.848% | 17.768% | 5.263% |
| Cocoa | 7.000% | 7.000% | 7.000% | 7.000% | 7.000% |
| Flavor | 1.57% | 0.72% | 1.29% | 1.57% | 1.57% |
| Carrageenan | 0.30% | 0.30% | 0.30% | 0.20% | 0.30% |
| Xanthan Gum | 0.30% | 0.30% | 0.30% | 0.20% | 0.30% |
| Acesulfame K | 0.140% | 0.140% | 0.140% | 0.140% | 0.140% |
| Sucralose | 0.0716% | 0.0716% | 0.0716% | 0.0716% | 0.0716% |
| Flour Salt | 0.550% | 0.550% | 0.550% | 0.550% | 0.550% |

### Example 11

In this example, two identical samples of commercially available pea protein are subjected to two different spray-drying processes and the resulting spray-dried pea proteins are then mixed with whey protein, reconstituted, and evaluated for mouthfeel and color. A control sample of identical commercially available pea protein not subjected to a spray-drying process is utilized as a control.

Commercially available pea protein (Roquette NUTRALYS® S85F) is added to water at about 10 wt.% total solids and allowed to hydrate until suspended. This protein-in-water (PIW) slurry is then split into two batches with the first batch (Sample 1) being spray-dried without further treatment (Cyclone configuration, nozzle size of 0.018, swirl chamber 4, and pressure of about 2500 psi). The second batch (Sample 2) is high temperature short time (HTST) processed with a 16 second hold at a temperature of 165-185°F and homogenized at a pressure of 3000-5000 psig prior to being sent to the spray-drier under identical conditions to Sample 1.

No issues are encountered during the process of drying. About 24 pounds of powder are collected (about 12 pounds from each batch). The control and Sample 1 and Sample 2 are separately dryblended with instantized whey protein, at a 50:50 weight ratio and evaluated for mouthfeel improvement. A significant color and mouthfeel is seen in both Sample 1 and Sample 2 as compared to the control. Both Sample 1 and Sample 2 had virtually no gritty or slimy mouthfeel and had good light color. The control had a substantial gritty mouthfeel along with a slimy mouthfeel.

## Claims

1. A powdered nutritional formulation comprising a dryblended plant protein, wherein at least a portion of the dryblended plant protein is spray-dried plant protein.

2. The powdered nutritional formulation of Claim 1 wherein the dryblended plant protein comprises up to 50 wt.% by weight of the total protein present in the nutritional formulation.

3. The powdered nutritional formulation of Claim 1 wherein at least 50 wt.% of the plant protein present in the powdered nutritional formulation is spray-dried plant protein.

4. The powdered nutritional formulation of Claim 1 wherein the plant protein is selected from the group consisting of pea protein, soy protein, and combinations thereof.

5. The powdered nutritional formulation of Claim 4 wherein the plant protein is pea protein.

6. The powdered nutritional formulation of Claim 1 further comprising at least one milk protein.

7. The powdered nutritional formulation of Claim 1 wherein the plant protein has been high temperature short time pasteurized prior to being spray-dried.

8. A powdered nutritional formulation comprising at least one milk protein and at least one spray-dried plant protein, wherein the spray-dried plant protein comprises up to 50 wt.% of the total protein in the powdered nutritional formulation.

9. The powdered nutritional formulation of Claim 8 wherein the plant protein is selected from the group consisting of pea protein, soy protein, and combinations thereof.

10. The powdered nutritional formulation of Claim 9 wherein the plant protein is pea protein.

11. A method of preparing a dryblended powdered nutritional formulation including a spray-dried plant protein, the method comprising:
preparing a base powder including at least one of a fat, carbohydrate, and protein; and
dry-blending into the base powder a spray-dried plant protein.

12. The method of Claim 11 wherein the plant protein is selected from the group consisting of pea protein, soy protein, and combinations thereof.

13. The method of Claim 11 wherein the plant protein is high temperature short time pasteurized and spray-dried prior to being dryblended into the base powder.

14. The method of Claim 13 wherein the plant protein is high temperature short time pasteurized at a temperature of from 74°C (165°F) to 85°C (185°F) for a time period of from about 12 seconds to about 20 seconds.

15. The method of Claim 13 wherein the plant protein is homogenized after being high temperature short time pasteurized and prior to being spray-dried.

## Patentansprüche

1. Pulverförmige Nährstoffformulierung mit einem trockengemischten Pflanzenprotein, wobei wenigstens ein Teil des trockengemischten Pflanzenproteins ein sprühgetrocknetes Pflanzenprotein ist.

2. Pulverförmige Nährstoffformulierung nach Anspruch 1, wobei das trockengemischte Pflanzenprotein bis zu 50 Gew.-% des gesamten in der Nährstoffformulierung vorhandenen Proteins aufweist.

3. Pulverförmige Nährstoffformulierung nach Anspruch 1, wobei wenigstens 50 Gew.-% des in der pulverförmigen Nährstoffformulierung vorhandenen Pflanzenproteins sprühgetrocknetes Pflanzenprotein ist.

4. Pulverförmige Nährstoffformulierung nach Anspruch 1, wobei das Pflanzenprotein aus der Gruppe bestehend aus Erbsenprotein, Sojaprotein und Kombinationen davon ausgewählt ist.

5. Pulverförmige Nährstoffformulierung nach Anspruch 4, wobei das Pflanzenprotein Erbsenprotein ist.

6. Pulverförmige Nährstoffformulierung nach Anspruch 1, die ferner wenigstens ein Milchprotein aufweist.

7. Pulverförmige Nährstoffformulierung nach Anspruch 1, wobei das Pflanzenprotein vor dem Sprühtrocknen kurzzeitig bei hoher Temperatur pasteurisiert wurde.

8. Pulverförmige Nährstoffformulierung mit wenigstens einem Milchprotein und wenigstens einem sprühgetrockneten Pflanzenprotein, wobei das sprühgetrocknete Pflanzenprotein bis zu 50 Gew.-% des gesamten Proteins in der Nährstoffformulierung aufweist.

9. Pulverförmige Nährstoffformulierung nach Anspruch 8, wobei das Pflanzenprotein aus der Gruppe bestehend aus Erbsenprotein, Sojaprotein und Kombinationen davon ausgewählt ist.

10. Pulverförmige Nährstoffformulierung nach Anspruch 9, wobei das Pflanzenprotein Erbsenprotein ist.

11. Verfahren zur Herstellung einer trockengemischten pulverförmigen Nährstoffformulierung, die ein sprühgetrocknetes Pflanzenprotein einschließt, wobei das Verfahren Folgendes aufweist:
Herstellen eines Ausgangspulvers, das wenigstens ein Fett und/oder Kohlenhydrat und/oder Protein einschließt; und
Trockenmischen eines sprühgetrockneten Pflanzenproteins in das Ausgangspulver.

12. Verfahren nach Anspruch 11, wobei das Pflanzenprotein aus der Gruppe bestehend aus Erbsenprotein, Sojaprotein und Kombinationen davon ausgewählt ist.

13. Verfahren nach Anspruch 11, wobei das Pflanzenprotein vor dem Trockenmischen in das Ausgangspulver kurzzeitig bei hoher Temperatur pasteurisiert und sprühgetrocknet wird.

14. Verfahren nach Anspruch 13, wobei das Pflanzenprotein kurzzeitig bei hoher Temperatur bei einer Temperatur von 74°C (165°F) bis 85°C (185°F) über einen Zeitraum von ungefähr 12 Sekunden bis ungefähr 20 Sekunden pasteurisiert wird.

15. Verfahren nach Anspruch 13, wobei das Pflanzenprotein homogenisiert wird, nachdem es kurzzeitig bei hoher Temperatur pasteurisiert wird und bevor es sprühgetrocknet wird.

## Revendications

1. Formulation nutritionnelle en poudre comprenant une protéine végétale mélangée à sec, dans laquelle au moins une partie de la protéine végétale mélangée à sec est une protéine végétale séchée par pulvérisation.

2. Formulation nutritionnelle en poudre de la revendication 1, dans laquelle la protéine végétale mélangée à sec comprend jusqu'à 50 % en poids par rapport au poids de la protéine totale présente dans la formulation nutritionnelle.

3. Formulation nutritionnelle en poudre de la revendication 1, dans laquelle au moins 50 % en poids de la protéine végétale présente dans la formulation nutritionnelle en poudre est une protéine végétale séchée par pulvérisation.

4. Formulation nutritionnelle en poudre de la revendication 1, dans laquelle la protéine végétale est choisie dans le groupe constitué de protéine de pois, de protéine de soja, et des combinaisons de celles-ci.

5. Formulation nutritionnelle en poudre de la revendication 4, dans laquelle la protéine végétale est une protéine de pois.

6. Formulation nutritionnelle en poudre de la revendication 1, comprenant en outre au moins une protéine de lait.

7. Formulation nutritionnelle en poudre de la revendication 1, dans laquelle la protéine végétale a été pasteurisée à haute température et de courte durée avant d'être séchée par pulvérisation.

8. Formulation nutritionnelle en poudre comprenant au moins une protéine de lait et au moins une protéine végétale séchée par pulvérisation, où la protéine végétale séchée par pulvérisation comprend jusqu'à 50 % en poids de la protéine totale dans la formulation nutritionnelle en poudre.

9. Formulation nutritionnelle en poudre de la revendication 8, dans laquelle la protéine végétale est choisie dans le groupe constitué de protéine de pois, de protéine de soja et des combinaisons de celles-ci.

10. Formulation nutritionnelle en poudre de la revendication 9, dans laquelle la protéine végétale est une protéine de pois.

11. Procédé de préparation d'une formulation nutritionnelle en poudre mélangée à sec comportant une protéine végétale séchée par pulvérisation, le procédé comprenant le fait :
de préparer une poudre de base comportant au moins l'un(e) d'une matière grasse, d'un glucide et d'une protéine ; et
de mélanger à sec, dans la poudre de base, une protéine végétale séchée par pulvérisation.

12. Procédé de la revendication 11, dans lequel la protéine végétale est choisie dans le groupe constitué de protéine de pois, de protéine de soja et des combinaisons de celles-ci.

13. Procédé de la revendication 11, dans lequel la protéine végétale est séchée par pulvérisation et pasteurisée à haute température et de courte durée avant d'être mélangée à sec dans la poudre de base.

14. Procédé de la revendication 13, dans lequel la protéine végétale est pasteurisée à haute température et de courte durée à une température allant de 74°C (165°F) à 85°C (185°F) pendant une période d'environ 12 secondes à environ 20 secondes.

15. Procédé de la revendication 13, dans lequel la protéine végétale est homogénéisée après avoir été pasteurisée à haute température et de courte durée et avant d'être séchée par pulvérisation.
